Europäisches Patentamt

European Patent Office

Office européen des brevets

(19)

(11) **EP 1 206 359 B1**

(12) **EUROPÄISCHE PATENTSCHRIFT**

(45) Veröffentlichungstag und Bekanntmachung des
Hinweises auf die Patenterteilung:
**02.11.2005  Patentblatt 2005/44**

(51) Int Cl.$^7$: **B60C 23/06**

(21) Anmeldenummer: **00945726.8**

(86) Internationale Anmeldenummer:
**PCT/EP2000/005284**

(22) Anmeldetag: **08.06.2000**

(87) Internationale Veröffentlichungsnummer:
**WO 2001/010658 (15.02.2001 Gazette 2001/07)**

(54) **VERFAHREN UND VORRICHTUNG ZUR ERKENNUNG DES DRUCKVERLUSTS IN EINEM REIFEN EINES RADES EINES FAHRZEUGS**

METHOD AND DEVICE FOR THE DETECTION OF A PRESSURE DROP IN A TIRE OF A VEHICLE WHEEL

PROCEDE ET DISPOSITIF POUR LA DETECTION DE LA PERTE DE PRESSION DANS LE PNEU D'UNE ROUE D'UN VEHICULE AUTOMOBILE

(84) Benannte Vertragsstaaten:
**DE**

(30) Priorität: **06.08.1999  DE 19937005
27.03.2000  DE 10015230**

(43) Veröffentlichungstag der Anmeldung:
**22.05.2002  Patentblatt 2002/21**

(73) Patentinhaber: **Continental Teves AG & Co. oHG
60488 Frankfurt am Main (DE)**

(72) Erfinder: **GRIESSER, Martin
D-65760 Eschborn (DE)**

(56) Entgegenhaltungen:
**DE-A- 19 619 393**

EP 1 206 359 B1

**Beschreibung**

Die Erfindung betrifft ein Verfahren zur Erkennung des Druckverlusts in einem Reifen eines Rades eines Fahrzeugs gemäß dem Oberbegrif des unabhängigen Anspruchs.

Die Kenntnis des Drucks in den einzelnen Reifen ist aus vielerlei Gründen wünschenswert: Zum einen ist das Fahren mit ungenügendem Reifendruck an sich unsicher, so dass eine Information des Fahrers über ungenügenden Reifendruck an irgendeinem oder an einem bestimmten Rad wünschenswert ist. Darüber hinaus gehen moderne Fahrdynamikregelungen von bestimmten Kraftübertragungsmechanismen zwischen Fahrbahn und Reifen aus. Die Arbeitspunkte der Regelstrategien sind auf diese Annahmen ausgelegt. Wenn der Reifendruck in einem Rad aber unrichtig und insbesondere zu gering ist, stimmen die Voraussetzungen, auf denen die Fahrdynamikregelungen aufbauen, nicht mehr, und letztere sind an die tatsächliche Situation entweder schlecht angepaßt oder können sogar teilweise schädlich sein. Auch zur Beeinflussung von Regelungsstrategien der Fahrdynamikregelung in modernen Kraftfahrzeugen sind also Kenntnisse hinsichtlich der Reifendruckverhältnisse wünschenswert.

Reifendrücke können direkt sensorisch erfaßt werden. Dies erfordert jedoch zusätzlichen Sensor- und Verkabelungsaufwand. Darüber hinaus muß eine Schnittstelle zwischen dem rotierenden Rad und der feststehenden sonstigen Hardware geschaffen werden. Dies ist aufwendig und häufig auch störanfällig. Ein anderes Verfahren ist es, Informationen zu den Reifendruckverhältnissen aus den Radsignalen herzuleiten. Radsignale sind radindividuelle Sensorsignale, die eine Information über die Radwinkelgeschwindigkeit enthalten. In modernen Fahrzeugdynamikregelungssystemen gibt es diese Radsignale sowieso, da sie für Funktionen wie ABS oder ESP (elektronisches Stabilitätsprogramm) benötigt werden. Die Radsignale können eine Impulsfolge sein, deren Frequenz ein Maß für die Drehgeschwindigkeit des Rades ist.

Aus DE 196 19 393 A1 geht ein System zur Überwachung des Reifenzustandes hervor, welches aus Größen, die die Drehgeschwindigkeiten der Räder repräsentieren, Quotienten bildet und diese Quotienten zur Erkennung eines Druckverlustes untereinander vergleicht.

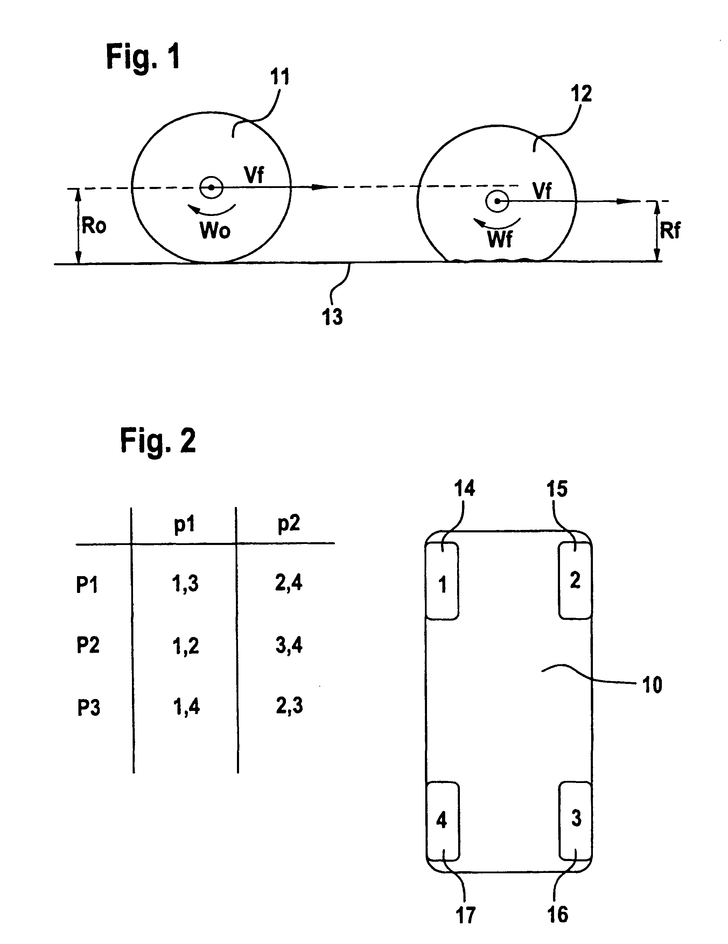

Der Mechanismus, anhand dessen aus den Radsignalen ein Rückschluß auf Reifendruckverhältnisse gezogen werden kann, wird anhand von Fig. 1 erläutert. 11 ist ein Rad auf einer Fahrbahn 13. Das Fahrzeug bewegt sich mit der Fahrzeuggeschwindigkeit Vf. Das Rad dreht sich im ordnungsgemäßen Zustand mit der Winkelgeschwindigkeit Wo. Vf und Wo hängen über die Formel Wo = Vf/Ro zusammen, wobei $\Delta$Ro der der dynamische Abrollradius $\Delta R_{dyn}$ bei normalem Reifendruck des Rades 11 ist. Bezugsziffer 12 zeigt ein Rad mit Druckverlust. Da der Reifendruck geringer ist, die Radbelastung aber in erster Näherung gleich bleibt, verlängert sich der Latsch, mehr Profil wird an die Fahrbahn 13 gedrückt, so dass der dynamische Abrollradius im Fehlerfall Rf kleiner wird. Da aber das fehlerhafte Rad mit der gleichen Fahrzeuggeschwindigkeit Vf wie das ordnungsgemäße Rad fortbewegt wird, ergibt sich entsprechend der obengenannten Formel für das fehlerhafte Rad eine Winkelgeschwindigkeit Wf, die größer ist als die Winkelgeschwindigkeit Wo des ordnungsgemäßen Rades. Da sich die Radwinkelgeschwindigkeit in die Radsignale hinein abbildet, kann somit aus den Radsignalen eine Information bezüglich des Reifendrucks gewonnen werden. Allerdings sind Vorkehrungen zu treffen, um Fehlerfassungen zu vermeiden.

Eine bekannte Strategie hierzu ist es, bezugnehmend auf die Radradien aller Räder des Fahrzeugs eine Prüfgröße zu ermitteln und diese dann zu überprüfen. Die Ermittlung erfolgt so, dass Störgrößen sich gegebenenfalls ausmitteln können. Anstelle der Radradien können äquivalente Werte verwendet werden, beispielsweise die Radwinkelgeschwindigkeiten (umgekehrt proportional zu den jeweiligen Radradien) oder der Kehrwert der Radwinkelgeschwindigkeiten (direkt proportional zu den Radradien).

Störgrößen sind beispielsweise Kurvenfahrt. Die Räder an der Kurvenaußenseite haben einen größeren Radius zu fahren als die an der Innenseite, so dass die Räder an der Kurvenaußenseite eine höhere Frequenz an ihren Radsignalen zeigen werden, ohne dass dies auf Reifendruckverlust zurückzuführen wäre. Eine andere Störgröße ist Antriebsschlupf. Die Räder an der angetriebenen Achse werden einen leichten Schlupf aufweisen, so dass auch diese Räder im Vergleich zu den nicht angetriebenen Rädern eine höhere Umlaufgeschwindigkeit aufweisen, ohne dass dies auf Reifendruckverlust an den Rädern an der angetriebenen Achse zurückzuführen wäre.

Eine Prüfgröße, die in gewisser Weise gegenüber solchen Störungen unempfindlich ist, kann beispielsweise wie folgt ermittelt werden:

$$PG = \frac{W1 + W3}{W2 + W4}$$

wobei W1 die Winkelgeschwindigkeit des Rades 14 im Fahrzeug 10 der Fig. 2 ist, W2 die Winkelgeschwindigkeit des Rades 15, W3 die Winkelgeschwindigkeit des Rades 16 und W4 die Winkelgeschwindigkeit des Rades 17. Es erfolgt eine diagonale Paarung der Räder, Summenbildung innerhalb der Paare und Quotientenbildung der Summen. Auf diese Weise mitteln sich zumindest einige systematische Fehler, die nicht auf Reifendruckverluste zurückzuführen sind, heraus. Die Prüfgröße kann dann in ihrem Wert untersucht werden. Es können daraus Rückschlüsse auf Reifendruckverhältnisse gezogen werden. Im idealen Fall (alle Räder gleich groß und korrekter Druck), ist der Quotient 1. Wenn ein Rad Druck verliert, wird dessen Radius bzw.

Winkelgeschwindigkeit abweichen, und demzufolge wird auch der Quotient vom idealen Wert abweichen. Aus der Richtung der Abweichung kann auf Einzelheiten hinsichtlich Reifendruckverhältnisse geschlossen werden. Wenn beispielsweise in der obengenannten Formel die Prüfgröße abweichend vom normalen Wert 1 nunmehr den Wert 1,1 hat, kann die bedeuten, dass entweder die Winkelgeschwindigkeit eines der Räder 1 oder 3 größer geworden ist oder dass die Winkelgeschwindigkeit eines der Räder 2 oder 4 kleiner geworden ist. Auch letzteres kann auftreten, beispielsweise indem ein Reifen von der Sonne beschienen wird, dieser sich dadurch aufheizt, der Innendruck und damit sein Radius steigt und seine Winkelgeschwindigkeit sinkt.

Auch das oben beschriebene Verfahren ist jedoch in mancherlei Hinsicht störanfällig.

Aufgabe der Erfindung ist es, ein Verfahren zur Erkennung des Druckverlusts in einem Reifen eines Rades anzugeben, die zuverlässig arbeiten.

Diese Aufgabe wird mit den Merkmalen des unabhängigen Anspruchs gelöst. Abhängige Ansprüche sind auf bevorzugte Ausführungsformen der Erfindung gerichtet.

Vorzugsweise weist die Ermittlungseinrichtung eine Korrektureinrichtung auf, die die Prüfgröße bezugnehmend auf gegebenenfalls gelernte Korrekturwerte ermittelt.

Erfindungsgemäß werden mehrere Prüfgrößen bezugnehmend auf mehrere unterschiedliche Radpaarungen ermittelt, und es wird nur dann auf einen Druckverlust erkannt, wenn durch alle ermittelten Prüfgrößen ein bestimmtes Fahrzeugrad als Rad mit möglichem Druckverlust ausgewiesen wird.

Es ist möglich, das Verfahren insofern zweistufig zu betreiben, als anfänglich nur eine Prüfgröße ermittelt wird und nur dann, wenn diese Prüfgröße einen Hinweis auf einen möglichen Druckverlust ergibt, weitere Prüfgrößen ermittelt und ausgewertet werden.

Die unterschiedlichen Paarungen können sein: Entsprechend den Fahrzeugdiagonalen, entsprechend den Fahrzeugachsen, entsprechend den Fahrzeugseiten.

Die Ermittlung der Prüfgröße(n) kann bezugnehmend auf gegebenenfalls gelernte Korrekturwerte erfolgen. Die Korrekturwerte können fahrdynamikabhängig sein, so dass auch die Korrektur der Prüfgröße fahrdynamikabhängig erfolgt.

Beim Vergleich der Prüfgröße können auch zeitliche Betrachtungen herangezogen werden, etwas dahingehend, ob innerhalb eines bestimmten Zeitraums die Prüfgröße den Schwellenwert für einen bestimmten Zeitanteil erreicht bzw. passiert hat, oder ob die Prüfgröße den Schwellenwert über eine bestimmte Zeitdauer hinweg erreicht bzw. passiert hat. Erst wenn auch diese Zeitbedingungen erfüllt sind, wird auf das Erreichen bzw. Passieren eines Schwellenwertes erkannt, während Einzelereignisse noch nicht dazu führen.

Nachfolgend werden bezugnehmend auf die Zeichnungen einzelne Ausführungsformen der Erfindung erläutert, es zeigen:

Fig. 1 eine Darstellung zur Erläuterung des Prinzips der Druckverlusterkennung,

Fig. 2 eine Darstellung zur Erläuterung von Radpaarungen,

Fig. 3 ein Blockdiagramm einer erfindungsgemäßen Erkennungsvorrichtung,

Fig. 4 ein Logikdiagramm zur Darstellung der Erkennungslogik für die Druckverlusterkennung,

Fig. 5 ein Diagramm zur Darstellung der Bedeutung einer Prüfgröße und

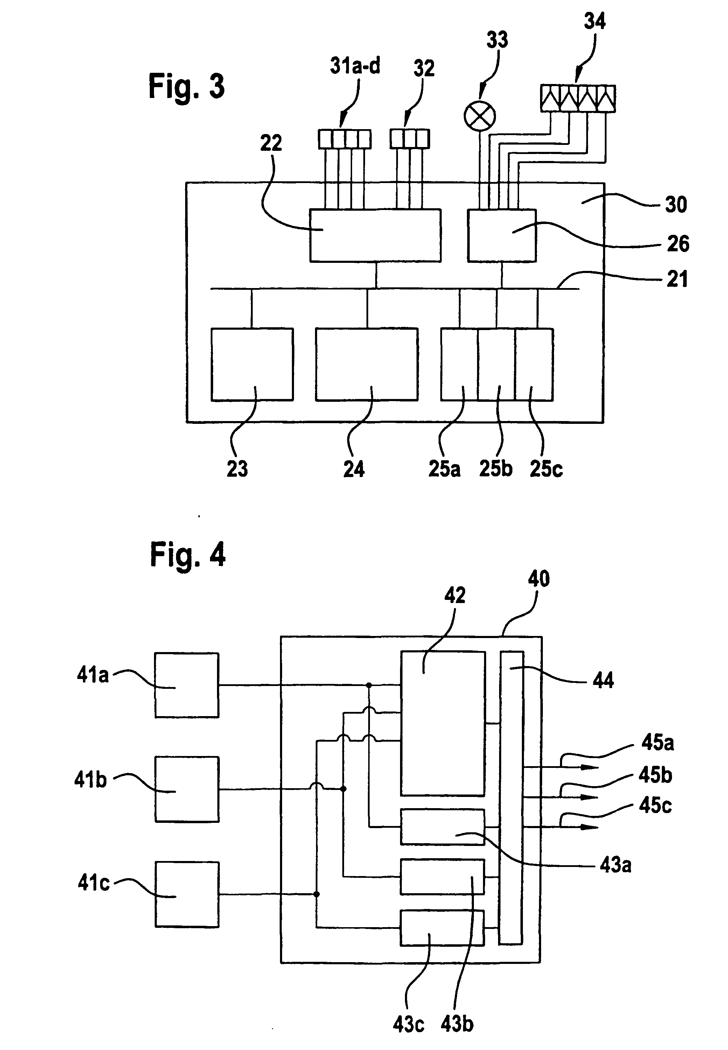

Fig. 3 zeigt schematisch eine Erkennungsvorrichtung 30. Sie ist mit Sensorik 31, 32 und Aktorik 33, 34 verbunden. Die Sensorik umfaßt insbesondere die Radsensoren 31a-d (pro Rad ein Radsensor). Daneben können weitere Sensoren vorgesehen sein, beispielsweise für die Fahrdynamik, wie Längsbeschleunigung, Querbeschleunigung, aber auch für Getriebe, Motordrehzahl usw. Die Aktorik kann insbesondere Ventile 34 für die Bremsenregelung aufweisen, wobei diese Ventile radindividuell vorgesehen sind. Daneben können akustische und/oder optische Ausgabeeinrichtungen 33 vorgesehen sein. Die Erkennungsvorrichtung 30 selbst weist eine Eingangsschnittstelle 22 für die Sensorik auf und eine Ausgangsschnittstelle 26 für die Aktorik. Die Eingangsschnittstelle 22 kann Signalwandlung, gegebenenfalls noch notwendige Analog/Digital-Wandlung, Filterung, Normierung von Signalen umfassen. Die Vorrichtung 30 weist einen internen Bus 21 auf, an den die genannten Schnittstellen 22, 26 angeschlossen sind. Daneben ist ein Festwertspeicher 23 vorgesehen (ROM), eine Recheneinheit 24 (CPU) und ein flüchtiger Speicher 25, die letztgenannten Komponenten sind ebenfalls an den Bus 21 angeschlossen.

Im ROM 23 können Programmcodes und verwendete Konstanten niedergelegt sein. Der flüchtige Speicher 25 kann verschiedene Bereiche aufweisen, beispielsweise 25a und 25b als RAMs und 25c als Registersatz. Der Datenverkehr mit der Sensorik und der Aktorik sowie intern kann durch eine geeignete Steuerung gesteuert werden, beispielsweise anhand von Interrupts.

In der Vorrichtung 30 können insbesondere mit der CPU 24 Prüfwerte ermittelt werden. Ein Prüfwert wird für eine bestimmte Radpaarung ermittelt. Fig. 2 zeigt mögliche Radpaarungen P1, P2 und P3. Jede dieser Paarungen weist ein erstes Paar p1 und ein zweites Paar p2 auf. Eine erste Paarung kann über die Fahrzeugdiagonalen erfolgen. Das erste Paar p1 umfaßt dann die Räder 1 und 3 (vorne links und hinten rechts), das zweite Paar p2 umfaßt die Räder 2 und 4 (vorne rechts und hinten links). Eine zweite Radpaarung P2 kann entsprechend den Fahrzeugachsen erfolgen, eine dritte Paarung P3 entsprechend den Fahrzeugseiten. Das einzelne ergibt sich aus der Tabelle in Fig. 2. Der Prüfwert kann bezugnehmend auf Radradien oder -größen, die diese Radradien widerspiegeln (z.B. die Radgeschwindigkeit), aller Räder des Fahrzeugs ermittelt werden. Für eine bestimmte Paarung (z.B. P1) können für die Räder der einzelnen Paare deren jeweilige Werte miteinander verknüpft werden. Die sich ergebenden zwei Einzelgrößen (eine für das erste Paar p1, eine andere für das zweite Paar p2) werden dann ihrerseits zu der Prüfgröße PG verknüpft. Es kann zur Anwendung der folgenden Formel kommen:

$$PG = \frac{Wp1r1 + Wp1r2}{Wp2r1 + Wp2r2,} \qquad (1)$$

wobei Wp1r1 die Geschwindigkeit des ersten Rades des ersten Paares ist, Wp1r2 die Geschwindigkeit des zweiten Rades des ersten Paares, Wp2r1 die Geschwindigkeit des ersten Rades des zweiten Paares und Wp2r2 die Geschwindigkeit des zweiten Rades des zweiten Paares.

Für die Paarung P1 würde sich dann die Prüfgröße gemäß folgender Formel berechnen:

$$PG = \frac{W1 + W3}{W2 + W4,} \qquad (2)$$

wobei W1 die Winkelgeschwindigkeit des Rades 1 in Fig. 2 bezeichnet, usw. Für die anderen Paarungen ergeben sich dann ähnliche Formeln für die jeweilige Prüfgröße.

Man erkennt, dass in eine wie oben ermittelte Prüfgröße die Radradien bzw. Größen, die diese Radradien widerspiegeln, aller Räder eingehen. Geht man davon aus, dass gleichzeitiger Druckverlust an zwei Rädern sehr unwahrscheinlich ist, kann damit durch Überprüfung dieser einzigen Prüfgröße qualitativ das Vorliegen von Druckverlust erkannt werden. Man erkennt weiter, dass bei den angegebenen Formeln im idealen Fall (alle Räder gleicher Durchmesser) die Prüfgröße den Wert 1 hat, da die Eingangswerte der Quotienten jeweils gleich sind. Somit kann auf das vorliegen von Druckverlust erkannt werden, wenn die Prüfgröße vom Wert 1 abweicht.

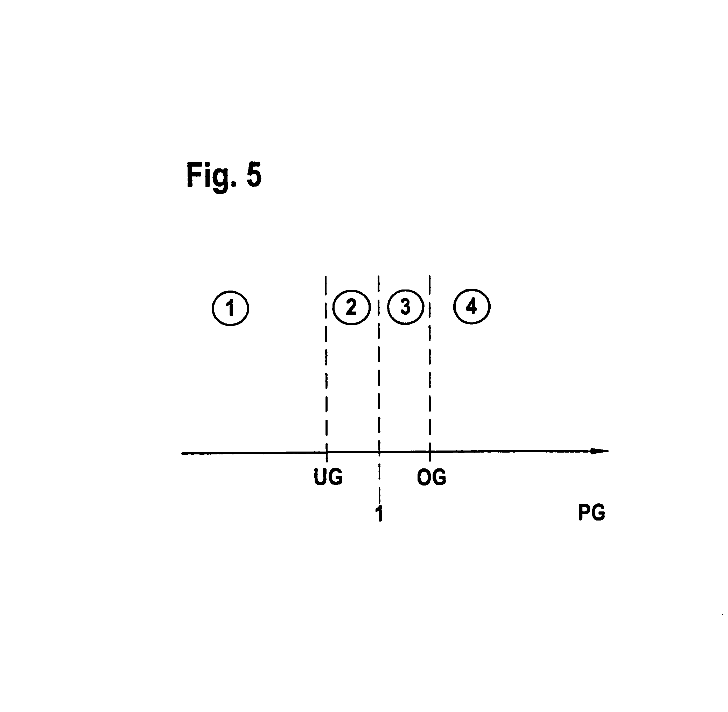

Zur Vermeidung von Fehlerkennungen werden hierbei jedoch Abweichungen zugelassen. Dies ist schematisch in Fig. 5 angedeutet. Eine Prüfgröße hat den idealen Wert 1. Abweichungen nach unten bis zu einer unteren Grenze UG und Abweichungen nach oben bis zu einer oberen Grenze OG würden nicht zu einer Erkennung bzw. Druckverlustvermutung führen. Erst signifikante Abweichungen können erfaßt werden. In Fig. 5 wären also die Bereiche (2) und (3) Toleranzbereiche um den Normwert herum (beispielsweise Normwert ± 0,8 bis 1 %), während die Bereiche (1) und (4) Bereiche wären, in denen auf einen Druckverlust erkannt bzw. ein solcher vermutet wird.

Den oben wiedergegebenen Formeln kann man außerdem entnehmen, dass aus der Richtung der Abweichung auf das Paar gefolgert werden kann, in dem Druckverlust vorliegt. Geht man davon aus, dass z.B. in Formel (2) mit Winkelgeschwindigkeiten gerechnet wird, hat Druckverlust zur Folge, dass entweder im Zähler oder im Nenner des Bruchs ein höherer Wert als normal steht. Demzufolge ergibt sich eine Abweichung entweder nach oben oder nach unten. Anders herum ausgedrückt: Liegt die Prüfgröße in Fig. 5 beispielsweise im Bereiche (1), hieße dies, dass im Nenner hohe Werte aufgetreten sind. Der Nenner wurde durch die Winkelgeschwindigkeiten der Räder 2 und 4 gebildet. Demnach läge dann entweder am Rad 2 oder am Rad 4 Druckverlust vor. Wenn anders herum die Prüfgröße im Bereich (4) liegt, hieße dies, dass im Zähler hohe Werte aufgetreten sind. Dies hieße, dass entweder am Rad 1 oder am Rad 3 in Fig. 2 Druckverlust vorliegt. Eine Auflösung nach einzelnen Rädern ist hierbei jedoch in der Regel nicht möglich.

Zur weitestmöglichen Vermeidung von Fehlerkennungen ist eine Logik 42, 44 vorgesehen, die bezugnehmend auf mehrere unterschiedliche Prüfgrößen (sich auf unterschiedliche Radpaarungen beziehende Prüfgrößen) eine Druckverlusterkennung vornimmt. In Fig. 4 ist dies schematisch gezeigt. Durch Kästchen 41a-c sind die unterschiedlichen Prüfgrößen symbolisiert, beispielsweise je eine für je eine der Paarungen P1 bis P3 in Fig. 2. Die Logik 42 empfängt alle Prüfgrößen und wertet diese aus. Sie erkennt nur dann auf einen Druckverlust, wenn ein bestimmtes Fahrzeugrad durch alle Prüfgrößen als Rad mit möglichem Druckverlust ausgewiesen wird.

Die Arbeitsweise wird anhand des folgenden Beispiels erläutert: Es wird angenommen, dass das Rad 15 in Fig. 2 vorne rechts (Rad Nr. 2) Druckverlust zeigt und deshalb eine höhere Winkelgeschwindigkeit W2 aufweist. Weiterhin wird angenomen, dass Prüfgrößen PG1, PG2 und PG3 entsprechend den Paarungen P1, P2 und P3 der Tabelle in Fig. 2 anhand der Winkelgeschwindigkeiten und bezugnehmend auf die oben angegebene Formel (1) ermittelt werden. Aufgrund der erhöhten Winkelgeschwindigkeit von Rad 2 wird demnach die Prüfgröße PG1 einen Wert kleiner als 1 haben, die Prüfgröße PG2 würde einen Wert größer als 1 haben, und die Prüfgröße PG3 würde wieder einen Wert kleiner als 1 haben, je nachdem, ob die zum Rad 2 gehörige Winkelgeschwindigkeit im Zähler oder im Nenner des Bruches steht. Aus der Prüfgröße PG1 würde die Logik 42 folgern, dass Rad 2 oder 4 Druckverlust aufweist. Aus der Prüfgröße PG2 würde die Logik 42 folgern, dass das Rad 1 oder 2 Druckverlust aufweist, und aus der Prüfgröße PG3 würde die Logik 42 folgern, dass das Rad 2 oder 3 Druckverlust aufweist. Alle Einzelvergleiche weisen damit das Rad 2 als möglichen Kandidaten aus. Da alle Prüfgrößen auf ein gemeinsames Rad mit möglichem Druckverlust verweisen, wird auf einen Druckverlust erkannt. Gegebenenfalls kann auch das Rad konkret identifiziert und ausgegeben werden.

Auf die Erkennung des Druckverlusts hin können unterschiedliche Maßnahmen stattfinden: Es kann eine bestimmte Warnung ausgegeben werden, um einem Fahrer die Situation anzuzeigen. Die Warnung kann optisch und/oder akustisch erfolgen. Darüber hinaus können Regelstrategien für die Fahrzeugdynamik und/oder Regelparameter hierfür an die neue Situation angepaßt werden, um den geänderten (ungünstigeren) Verhältnissen Rechnung zu tragen.

In einer Abwandlung kann zunächst nur eine einzelne Prüfgröße ermittelt werden (z.B. bezugnehmend auf Paarung P1 in Fig. 2, Formel 2). Erst wenn sich hier ein Verdacht auf einen Druckverlust ergibt (weil der Wert der Prüfgröße PG1 in Fig. 5 entweder im Bereich (1) oder im Bereich (4) liegt), werden die weiteren Prüfgrößen PG2 und PG3 ermittelt und ausgewertet. Dadurch wird unnötiger dauernd zu treibender Rechenaufwand und damit Belegung von Systemressourcen vermieden.

Für die wie oben beschrieben ermittelten Prüfgrößen können Korrekturwerte vorgesehen werden. Es kann statische und dynamische Korrekturwerte geben. Statische Korrekturwerte tragen unterschiedlichen Reifengeometrien Rechnung. Es kann nicht immer davon ausgegangen werden, dass alle Reifen den gleichen Durchmesser haben. Beispielsweise kann ein Reifen abgefahrener sein als ein anderer, so dass dessen Durchmesser sinkt. Außerdem können Notlaufräder andere Durchmesser haben. Solche sich langsam einstellende Veränderungen (oder lange dauernde Veränderungen) können gelernt und als Korrekturwert für die Prüfgröße verwendet werden. Äquivalent hierzu ist die Korrektur des Schwellenwerts, anhand dessen die Prüfgröße abgefragt wird. Darüber hinaus können fahrdynamikabhängige Korrekturen für die Prüfgröße ermittelt werden, etwa um Effekte aufgrund der Kurvendynamik oder von Radschlupf auszugleichen. Es werden dann die korrigierten Prüfgrößen mit dem Schwellenwert verglichen, oder es werden Prüfgrößen mit korrigierten Schwellenwerten verglichen.

Beim Vergleich einer (gegebenenfalls korrigierten) Prüfgröße mit einem (gegebenenfalls korrigierten) Schwellenwert können auch Zeitbetrachtungen angestellt werden. Ziel ist es, dass nicht ein einzelner, kurzzeitiger Signalausreißer zu einer Fehlentscheidung führt. So kann beispielsweise überprüft werden, ob die Prüfgröße innerhalb eines bestimmten Zeitfensters für einen bestimmten Zeitanteil innerhalb des Fensters den Schwellenwert erreicht bzw. passiert hat. Es kann auch überprüft werden, ob das Erreichen bzw. Passieren des Schwellenwerts für einen bestimmten Zeitraum ununterbrochen andauert. Nur wenn dies der Fall ist, wird im Vergleich auf ein Erreichen bzw. Passieren des Schwellenwerts erkannt.

Sofern die obengenannten Zeitbetrachtungen stattfinden, können die Zeiträume bzw. -fenster für korrigierte Prüfgrößen kürzer als für nicht korrigierte Prüfgrößen gesetzt werden.

Sofern sowohl korrigierte als auch nicht korrigierte Prüfgrößen vorliegen, ist es auch möglich, die genannten zeitlichen Betrachtungen lediglich für nicht korrigierte Prüfgrößen vorzunehmen, während bei korrigierten Prüfgrößen auf punktuelle Vergleiche abgestellt wird.

Neben der Logik 42, 44 zur Auswertung aller ermittelten Prüfgrößen können Auswertungen bzw. Logikteile 43a, 43b und 43c oder Vergleichseinrichtungen für die einzelnen Prüfgrößen vorgesehen sein, die ihrerseits bestimmte Überprüfungen anstellen. Das Ergebnis dieser Einzelüberprüfungen 43a-c wird durch die Ausgangslogik 44 aufgenommen und zu Ausgangssignalen 45 verknüpft. 45a kann ein eine Warnung veranlassendes Ausgangssignal sein. 45b kann ein Flag sein, das qualitativ auf interne Vorgänge einwirkt (beispielsweise Wahl von Parametersätzen, Wahl von Regelungsstrategien), und 45c kann ein quantitatives Signal sein, das quantitative Informationen über den Reifendruckverlust verfügbar macht (Rad, Ausmaß des Druckverlusts, usw.).

Mit dem erfindungsgemäßen Verfahren und der entsprechenden Vorrichtung ist es nicht nur möglich, eine Änderung des dynamischen Abrollradius und der dadurch hervorgerufenen Geschwindigkeitsänderung eines Rades festzustellen, sondern es wird auch erkennbar, ob sich dieses Rad schneller oder langsamer dreht als die übrigen. Eine höhere Radgeschwindigkeit wird als eindeutiger Hinweis auf einen Druckverlust gewertet. Ein langsameres Drehen eines Rades im Vergleich zu den Drehgeschwindigkeiten der übrigen Räder wird dagegen entweder als "normal" angesehen und daher nicht oder erst dann als Hinweis auf einen Druckverlust aufgefasst, wenn die Abweichung einen relativ hohen Grenzwert $th_3$ im Vergleich zu den Geschwindigkeiten oder den dynamischen Abrollradien $\Delta R_{dyn}$ der übrigen Räder überschreitet.

$\Delta R_0$ ist der Normalwert des dynamischen Abrollradius in der hier betrachteten Situation. Eine Abweichung des dynamischen Abrollradius $\Delta R_{dyn}$ von kleiner 0,8 bis 1% des schneller laufenden Rades von den dynamischen Abrollradien der übrigen Räder wird als innerhalb der Toleranz liegend angesehen, eine höhere Abweichung des dynamischen Abrollradius $\Delta R_{dyn}$, also ein über dem Grenzwert $th_1$ liegender Wert des dynamischen Abrollradius $\Delta R_{dyn}$, wird dagegen als Hinweis auf Druckverlust gewertet.

Es wurde festgestellt, dass entgegen dem üblichen Verhalten, bei dem bei Druckverlust im Reifen eine Radgeschwindigkeitserhöhung auftritt, bei manchen Reifen, insbesondere notlauffähigen Reifen, sogenannten Run-Flat-Reifen, Druckverlust zu einer geringeren Radgeschwindigkeit führt. Die Wirkrichtung ist damit genau ins Gegenteil verkehrt. Da ein langsameres Drehen jedoch auch eine natürliche Ursache, z.B. einseitig schneebedeckte Straße (µ-split), haben kann, wird die Schwelle th$_3$ für ein Druckverlusterkennung bei langsamer drehendem Rad relativ hoch gelegt Bereich zwischen den Grenzwerten th$_2$ und th$_3$ wird daher aus dem Erkennungsbereich gewissermaßen ausgeblendet.

In einer bestimmten Ausführungsform kann deshalb die Logik 42 eine Abfrage nicht nur dahingehend vornehmen, ob alle Prüfgrößen ein Rad als schneller ausweisen (im obengenannten Beispiel Rad 2), sondern auch dahingehend, ob alle Prüfgrößen ein Rad als langsamer ausweisen. Die zuletzt genannte Überprüfung aller Prüfgrößen auf ein zu langsam laufendes Rad hin kann analog dem obengenannten Beispiel wieder zur Ausweisung eines einzelnen Rades als ein zu langsam laufendes Rad führen. Dies kann dann als Druckverlusterkennung dienen und zu den gleichen oder ähnlichen Maßnahmen wie oben beschrieben führen.

Das gesamte System kann als digitales System implementiert sein. Die einzelnen Systemkomponenten (funktional, nicht im Hinblick auf Hardware) können so ausgelegt sein, dass sie auf verschiedene Hardwarekomponenten verteilt werden und ihre Koordination durch ein geeignetes Betriebssystem übernommen wird.

**Patentansprüche**

1. Verfahren zur Erkennung des Druckverlusts in einem Reifen eines Rades, mit den Schritten

   - Ermitteln zunächst einer ersten Prüfgröße bezugnehmend auf eine erste Radpaarung aus den Radradien oder aus Größen, die diese Radradien widerspiegeln, der Räder des Fahrzeugs, wobei die Prüfgröße ein Quotient zweier Summen von je zwei Radradien oder Größen, die diese Radradien widerspiegeln, je eines Paars von Fahrzeugrädern ist,
   - Vergleichen der ersten Prüfgröße mit einem Schwellenwert, und
   - Ermitteln weiterer Prüfgrößen bezugnehmend auf weitere Radpaarungen, wenn der Vergleich der ersten Prüfgröße einen Hinweis auf einen möglichen Druckverlust gibt, und
   - Erkennen eines Druckverlusts, wenn ein bestimmtes Fahrzeugrad durch alle Prüfgrößen als Rad mit möglichem Druckverlust ausgewiesen wird.

2. Verfahren nach Anspruch 1, **dadurch gekennzeichnet, dass** nur dann auf einen Druckverlust erkannt wird, wenn ein bestimmtes Fahrzeugrad als schneller drehendes Rad, im Vergleich zu den übrigen Fahrzeugrädern, erkannt wird.

3. Verfahren nach Anspruch 2, **dadurch gekennzeichnet, dass** nur dann auf einen Druckverlust erkannt wird, wenn die Abweichung der Drehgeschwindigkeit des schneller drehenden Rades von der Drehgeschwindigkeit der übrigen Räder oder die Abweichung eines dynamischen Abrollradius ($\Delta R_{dyn}$) eines Rades von den dynamischen Abrollradien der übrigen Räder einen vorgegebenen Grenzwert (th$_1$) überschreitet.

4. Verfahren nach Anspruch 3, **dadurch gekennzeichnet, dass** als Grenzwert (th$_1$) eine Abweichung des dynamischen Abrollradius ($\Delta R_{dyn}$) von etwa 0,8% bis 1% von den dynamischen Abrollradien ($\Delta R_{dyn}$) der übrigen Räder vorgegeben wird.

5. Verfahren nach Anspruch 1, **dadurch gekennzeichnet, dass** auf einen Druckverlust erkannt wird, wenn ein bestimmtes Fahrzeugrad als schneller drehendes Rad oder als langsamer drehendes Rad im Vergleich zu den übrigen Fahrzeugrädern erkannt wird.

6. Verfahren nach Anspruch 5, **dadurch gekennzeichnet, dass** nur dann auf einen Druckverlust erkannt wird, wenn die Abweichung der Drehgeschwindigkeit des, im Vergleich zu den übrigen Rädern, schneller oder langsamer drehenden Rades oder die Abweichung des dynamischen Abrollradius ($\Delta R_{dyn}$) des schneller oder langsamer drehenden Rades von den dynamischen Abrollradien der übrigen Räder vorgegebene Grenzwerte (th$_1$, th$_3$) überschreitet.

7. Verfahren nach Anspruch 6, **dadurch gekennzeichnet, dass** als Grenzwert (th$_1$) für die Druckverlusterkennung eines schneller drehenden Rades eine Abweichung des dynamischen Abrollradius (($\Delta R_{dyn}$) dieses Rades von etwa 0,8% bis 1% von den dynamischen Abrollradien ($\Delta R_{dyn}$) der übrigen Räder und als Grenzwert (th$_3$) für die Druckverlusterkennung eines langsamer drehenden Rades eine Abweichung des Abrollradius dieses Rades von etwa 1,5 % vorgegeben werden.

8. Verfahren nach Anspruch 1, **dadurch gekennzeichnet, dass** die erste Radpaarung die zwei Paare von Rädern an den Fahrzeugdiagonalen ist.

9. Verfahren nach einem der vorherigen Ansprüche, **dadurch gekennzeichnet, dass** drei Prüfgrößen ermittelt werden, nämlich für eine erste Radpaarung betreffend die zwei Paare von Rädern an den zwei Fahrzeugdiagonalen, eine zweite Radpaarung betreffend die zwei Paare von Rädern an den zwei Fahrzeugseiten und eine dritte Radpaarung betreffend die zwei Paare von Rädern an den zwei Fahrzeugachsen.

**10.** Verfahren nach einem der vorherigen Ansprüche, **dadurch gekennzeichnet, dass** eine Prüfgröße bezugnehmend auf gegebenenfalls gelernte Korrekturwerte ermittelt wird.

**11.** Verfahren nach einem der vorherigen Ansprüche, **dadurch gekennzeichnet, dass** bei Vergleich einer Prüfgröße mit einem Schwellenwert bzw. Grenzwert Betrachtungen über einen bestimmten Zeitraum und/oder über statistische Absicherung der Ergebnisse angestellt werden.

**12.** Verfahren nach Anspruch 11, **dadurch gekennzeichnet, dass** der Betrachtungszeitraum für eine nach Anspruch 10, ermittelte Prüfgröße kürzer als für eine ohne Korrektur ermittelte Prüfgröße ist.

**13.** Verfahren nach einem der vorherigen Ansprüche, **dadurch gekennzeichnet, dass** eine Prüfgröße PG bezugnehmend auf die Formel

$$PG = \frac{Wp1r1 + Wp1r2}{Wp2r1 + Wp2r2}$$

ermittelt wird, wobei Wp1r1 die Geschwindigkeit des ersten Rades des ersten Paares ist, Wp1r2 die Geschwindigkeit des zweiten Rades des ersten Paares, Wp2r1 die Geschwindigkeit des ersten Rades des zweiten Paares und Wp2r2 die Geschwindigkeit des zweiten Rades des zweiten Paares.

**Claims**

**1.** Method of detection of a pressure drop in a tire of a wheel, comprising the following steps:

- determining initially a first test variable with respect to a first wheel pair combination from the wheel radii or from variables representing these wheel radii of the wheels of the vehicle, wherein the test variable is a quotient of two sums of each two wheel radii or variables representing these wheel radii of each one pair of vehicle wheels,
- comparing the first test variable with a threshold value, and
- determining additional test variables with respect to further wheel pair combinations when the comparison of the first test variable indicates a possible pressure drop, and
- detection of a pressure drop when a defined vehicle wheel has been proven by all test variables as the wheel with a possible pressure drop.

**2.** Method as claimed in claim 1, **characterized in that** a pressure drop is considered to have been detected only if a defined vehicle wheel is detected as a faster turning wheel compared to the remaining vehicle wheels.

**3.** Method as claimed in claim 2, **characterized in that** a pressure drop is considered to have been detected only if the discrepancy of the rotational speed of the faster turning wheel from the rotational speed of the other wheels or the discrepancy of the dynamic rolling radius ($\Delta R_{dyn}$) from the dynamic rolling radii of the other wheels exceeds a predetermined threshold value ($th_1$).

**4.** Method as claimed in claim 3, **characterized in that** as a limit value ($th_1$) a discrepancy of the dynamic rolling radius ($\Delta R_{dyn}$) of roughly 0.8% to 1% from the dynamic rolling radii ($\Delta R_{dyn}$) of the other wheels is predetermined.

**5.** Method as claimed in claim 1, **characterized in that** a pressure drop is considered to have been detected when a defined vehicle wheel is identified as a wheel turning faster or more slowly compared to the remaining vehicle wheels.

**6.** Method as claimed in claim 5, **characterized in that** a pressure drop is considered to have been detected only if the discrepancy of the rotational speed of the wheel turning faster or more slowly compared to the remaining vehicle wheels or the discrepancy of the dynamic rolling radius ($\Delta R_{dyn}$) of the wheel turning faster or more slowly from the dynamic rolling radii of the remaining wheels exceeds predetermined limit values ($th_1$, $th_3$).

**7.** Method as claimed in claim 6, **characterized in that** as a limit value ($th_1$) for the detection of a pressure drop of a faster turning wheel, a discrepancy of the dynamic rolling radius ($\Delta R_{dyn}$) of this wheel of roughly 0.8% to 1% from the dynamic rolling radii ($\Delta R_{dyn}$) of the remaining wheels is predetermined, and as a limit value ($th_3$) for the detection of a pressure drop of a wheel turning more slowly a discrepancy of the rolling radius of this wheel of roughly 1.5 % is predetermined.

**8.** Method as claimed in claim 1, **characterized in that** the two pairs of wheels at the vehicle diagonal represent the first wheel pair combination.

**9.** Method as claimed in any one of the preceding claims, **characterized in that** three test variables are determined, i.e., for a first wheel pair combination concerning the two pairs of wheels at the two vehicle diagonals, a second wheel pair combination concerning the two pairs of wheels on the two vehicle sides, and a third wheel pair combination concerning the two pairs of wheels at the two vehicle axles.

10. Method as claimed in any one of the preceding claims,
 **characterized in that** a test variable is determined with respect to correction values that are possibly learnt.

11. Method as claimed in any one of the preceding claims,
 **characterized in that** when a test variable is compared with a threshold value or limit value, respectively, considerations are made over a defined period of time and/or with respect to a statistic storage of the results.

12. Method as claimed in claim 11,
 **characterized in that** the period of time of consideration for a test variable determined according to claim 10 is shorter than for a test variable that is determined without correction.

13. Method as claimed in any one of the preceding claims,
 **characterized in that** a test variable PG is determined with respect to the formula

$$PG = \frac{Wp1r1 + Wp1r2}{Wp2r1 + Wp2r2,}$$

wherein Wp1r1 is the speed of the first wheel of the first pair, Wp1r2 is the speed of the second wheel of the first pair, Wp2r1 is the speed of the first wheel of the second pair, and Wp2r2 is the speed of the second wheel of the second pair.

**Revendications**

1. Procédé à reconnaître la perte de pression dans un pneu d'une roue, comportant des démarches comme suite :

 - établir d'abord une première valeur de contrôle à l'égard d'une première paire de roue parmi des rayons de roue ou des valeurs correspondant aux desdites rayons de roue, des roues de voiture, la valeur de contrôle formant un quotient de deux sommes à chacun de deux rayons de roue ou des valeurs correspondant aux desdites rayons de roue de chaque paire de roue de voiture,
 - comparer la première valeur de contrôle avec une valeur seuil, et
 - établir des autres valeurs de contrôle à l'égard des autres paires de roue si la comparaison de la première valeur de contrôle réfère à une perte de pression potentielle, et
 - reconnaître une perte de pression si une roue de voiture définie dans toutes les valeurs de contrôle s'épreuve comme roue avec une perte de pression potentielle.

2. Procédé selon la revendication 1, **caractérisé en ce qu'**une perte de pression sera exclusivement constatée si l'une des roues de voiture est reconnue comme roue se tournant plus vite que les autres roues de voiture.

3. Procédé selon la revendication 2, **caractérisé en ce qu'**une perte de pression sera exclusivement constatée si la différence de la vitesse de rotation de la roue se tournant plus vite vis-à-vis la vitesse de rotation des autres roues ou si la divergence du rayon de déroulement dynamique vis-à-vis des autres roues dépasse une valeur seuil ($th_1$).

4. Procédé selon la revendication 3, **caractérisé en ce qu'**une divergence du rayon de déroulement dynamique ($\Delta R_{dyn}$) d'environ 0,8% à 1% vis-à-vis des rayons de déroulement dynamiques ($\Delta R_{dyn}$) des autres roues est prédéterminée.

5. Procédé selon la revendication 1, **caractérisé en ce qu'**une perte de pression est constatée si une roue de voiture définie est reconnue comme roue se tournant plus ou moins rapide que les autres roues de voiture.

6. Procédé selon la revendication 5, **caractérisé en ce qu'**une perte de pression sera exclusivement constatée si la divergence de la vitesse de rotation de la roue se tournant plus ou moins rapide que les autres roues ou si la divergence du rayon de déroulement dynamique ($\Delta R_{dyn}$) de la roue se tournant plus ou moins rapide dépasse les valeurs seuil ($th_1$, $th_3$) prédéterminées par des rayons de déroulement dynamiques des autres roues.

7. Procédé selon la revendication 6, **caractérisé en ce qu'**une divergence du rayon de déroulement dynamique ($\Delta R_{dyn}$) d'une roue se tournant plus vite d'environ 0,8 % à 1 % vis-à-vis des rayons de déroulement dynamique ($\Delta R_{dyn}$) des autres roues est prédéterminé comme valeur seuil ($th_1$) pour la reconnaissance de la perte de pression de ladite roue, et qu'une divergence du rayon de déroulement dynamique ($\Delta R_{dyn}$) de ladite roue d'environ 1,5 % est prédéterminé comme valeur seuil ($th_3$) pour la reconnaissance de la perte de pression d'un roue se tournant plus lentement.

8. Procédé selon la revendication 1, **caractérisé en ce que** la paire de roue première forme les deux paires de roue prévues aux diagonales de voiture.

9. Procédé selon l'une des revendications précédentes, **caractérisé en ce que** trois valeurs de contrôle sont établies, notamment pour une première paire de roue à l'égard de deux paires de roue prévues aux deux diagonales de voiture, une seconde paire de roues à l'égard de deux paires de roue prévues aux deux côtés de la voiture, et une troisième paire de roue à l'égard de deux paires de roue prévues aux deux essieux de voiture.

10. Procédé selon l'une des revendications précédentes, **caractérisé en ce qu'**une valeur de contrôle est établie à l'égard des valeurs de correction éventuellement constatées.

11. Procédé selon l'une des revendications précédentes, **caractérisé en ce qu'**on compare une valeur de contrôle avec une valeur seuil respectivement une valeur limite en effectuant des contrôles sur un certain espace de temps et/ou sur des épreuves statistiques des résultats..

12. Procédé selon la revendication 11, **caractérisé en ce que** l'espace de contrôle à l'égard de la valeur de contrôle établie selon la revendication 10 est plus court que l'espace de temps pour une valeur de contrôle établie sans correction.

13. Procédé selon l'une des revendications précédentes, **caractérisé en ce qu'**une valeur de contrôle PG, à l'égard de la formule

$$PG = \frac{Wp1r1 + Wp1r2}{Wp2r1 + Wp2r2}$$

est établie, la valeur Wp1r1 formant la vitesse de la première roue de la paire première, Wp1r2 formant la vitesse de la seconde roue de la paire première, Wp2r1 formant la vitesse de la première roue de la paire secondaire, et Wp2r2 formant la vitesse de la seconde roue de la paire secondaire.

**Fig. 1**

**Fig. 2**

|    | p1  | p2  |
|----|-----|-----|
| P1 | 1,3 | 2,4 |
| P2 | 1,2 | 3,4 |
| P3 | 1,4 | 2,3 |

**Fig. 3**

**Fig. 4**

# Fig. 5